# EUROPÄISCHE PATENTANMELDUNG

(11) **EP 0 850 860 A2**
(43) Veröffentlichungstag der Anmeldung: **01.07.1998**
(21) Anmeldenummer: 97119216.6
(22) Anmeldetag: 04.11.1997
(51) Int. Cl.: B65G 27/00

(54) **Vorrichtung zur Schwingungsisolierung bei Schwingmaschinen**

(30) Priorität: 05.11.1996 DE 19645471
(71) Anmelder: Schenck Process GmbH, 64293 Darmstadt (DE)
(72) Erfinder: Bahn, Gerhard, 64354 Reinheim (DE); Lenart, Coloman, Dr., 64319 Pfungstadt (DE); Müller, Johannes, 68169 Mannheim (DE)
(74) Vertreter: Behrens, Helmut

(57) **Zusammenfassung**

Es wird eine Vorrichtung zur Reduzierung der dynamischen Fundamentbelastung bei Schwingmaschinen 1 vorgeschlagen, die aus einer flachen Baueinheit von Federelementen 11 mit hoher Hysteresewirkung und Schwingungsdämpfern 6 besteht, die ganzflächig oder einzeln unter den Stützfüßen 5 der Schwingmaschine 1 angeordnet ist.

## Beschreibung

Die Erfindung betrifft eine Vorrichtung zur Schwingungsisolierung für Schwingmaschinen gemäß dem Oberbegriff des Patentanspruchs 1.

Schwingmaschinen werden mit Schwingungserregern betrieben, die erhebliche dynamische Kräfte erzeugen, die auch auf das Fundament am Aufstellort wirken. Bei Neubauten zur Aufstellung von Schwingmaschinen wird ein entsprechend belastbares Fundament vorgesehen. Werden hingegen Schwingmaschinen auf vorhandenen Fundamenten oder Decken mit nicht ausreichender Belastbarkeit aufgestellt, so müssen entweder Fundamentverstärkungen oder speziell konstruierte Maschinen mit Vorrichtungen zur Schwingungsisolierung vorgesehen werden.

Aus der DE-AS 21 12 577 ist eine solche speziell konstruierte Siebmaschine mit vertikal angeordneten Gummifedern bekannt. Es handelt sich dabei um eine Schwingmaschine mit einer Nutzmasse, die an einem Siebrahmen angeordnet ist, der an jeder Ecke über eine Gummifeder verfügt. Die Gummifedern nehmen dabei sowohl die horizontal als auch die vertikal wirkenden Schwingungskräfte auf und verringern dadurch auch die auf das Fundament wirkenden dynamischen Kräfte. Da es sich hierbei offenbar um relativ harte Vollgummifedern handelt, dürfte die Verringerung der Fundamentbelastung nicht sehr groß sein, so daß hierdurch keine nennenswerte Fundamententlastung erzielbar ist. Allerdings wären zur Fundamententlastung auch Gummifedern aus weicherem Gummimaterial denkbar, die dann aber zu einem instabilen Verhalten der Maschine in Schwingrichtung führen würde.

Aus der DE-PS 21 21 539 ist eine speziell schwingungsisolierte Schwingmaschine bekannt. Bei dieser Schwingmaschine ist unter der Nutzmasse eine Gegenmasse angeordnet, die durch Federelemente mit der Nutzmasse und dem Fundament gekoppelt ist und ein sogenanntes Zweimassensystem darstellt. Durch die gekoppelte Gegenmasse wird auch der Gegenmasse eine Schwingung aufgeprägt, die je nach Kopplungsgrad gegenüber der Nutzmasse phasenversetzt schwingt und bei entsprechender Bemessung der Federkonstanten und der Größe der Gegenmasse eine phasenversetzte Schwingungsamplitude erzeugt, die der Nutzmasse entgegenwirkt und hierdurch zu einer erheblichen Verringerung der dynamischen Fundamentkräfte führt. An dieser Schwingmaschine sind auch noch zusätzlich pneumatische oder hydraulische Schwingungsdämpfer vorgesehen, die die Spitzenamplituden beim Resonanzdurchgang dämpfen, da die Gegenmasse auf die Betriebsfrequenz im überkritischen Bereich abgestimmt ist. Derartige Schwingungsisolierungen sind sehr aufwendig, da sie in jedem Fall eine mit der Nutzmasse federnd gekoppelte Gegenmasse erfordern, die speziell für die Schwingmaschine ausgelegt und hergestellt werden muß.

Der Erfindung liegt deshalb die Aufgabe zugrunde, eine Schwingungsisolierung für Schwingmaschinen zu schaffen, die ohne eine derartige Gegenmasse auskommt.

Diese Aufgabe wird durch die in Patentanspruch 1 angegebene Erfindung gelöst. Weiterbildung und vorteilhafte Ausführungsbeispiele sind in den Unteransprüchen angegeben.

Die Erfindung hat den Vorteil, daß durch die Baueinheit zur Schwingungsisolierung auch vorhandene Einmassenschwingmaschinen auf schwachen Fundamenten aufgestellt werden können, ohne daß dazu aufwendige Fundamentverstärkungen notwendig sind.

Weiterhin sind durch die Erfindung in vorteilhafter Weise für viele Schwingungsaufgaben auch häufiger kostengünstigere Einmassenschwingmaschinen einsetzbar, weil durch die Schwingungsisolierung eine weitgehende Unabhängigkeit von vorhandenen zulässigen Fundamentbelastungen erreicht wird.

Weiterhin kann durch die erfinderische Schwingungsisolierung auch Gewicht und Bauhöhe gegenüber einer Zweimassenausführung eingespart werden, da für die Federelemente und Schwingungsdämpfer keine besondere Masse unter der Schwingmaschine vorsehbar ist und durch eine spezielle Formgebung und Anzahl dieser Elemente eine besonders flache Baueinheit erreichbar ist.

Durch die baueinheitliche Ausführung der Isoliervorrichtung ist in vorteilhafter Weise eine nachträgliche Verwendung bei vorhandenen Schwingmaschinen möglich, die dann auch auf anderen Standorten einsetzbar sind, so daß auf einfache Art und Weise ganze Behandlungs- und Förderwege mit Schwingmaschinen örtlich veränderbar einsetzbar sind.

Bei einer besonderen Ausführungsart der erfinderischen Schwingungsisolierungsbaueinheit können in vorteilhafter Weise auch kostengünstige Federelemente aus Gummi, insbesondere Hohlgummifedern in Standardausführung, verwendet werden, bei der eine Anpassung an eine höchstzulässige Fundamentbelastung durch vorteilhafte Wahl der Anzahl der Federelemente, des Federmaterials und/oder der Formgebung erreichbar ist.

Die Erfindung wird anhand eines Ausführungsbeispiels, das in der Zeichnung dargestellt ist, näher erläutert. Es zeigen:
- Fig. 1: eine schematische Darstellung einer Einmassenschwingmaschine mit Schwingungsisolierung und
- Fig. 2: eine Baueinheit einer Schwingungsisolierung für Schwingmaschinen.

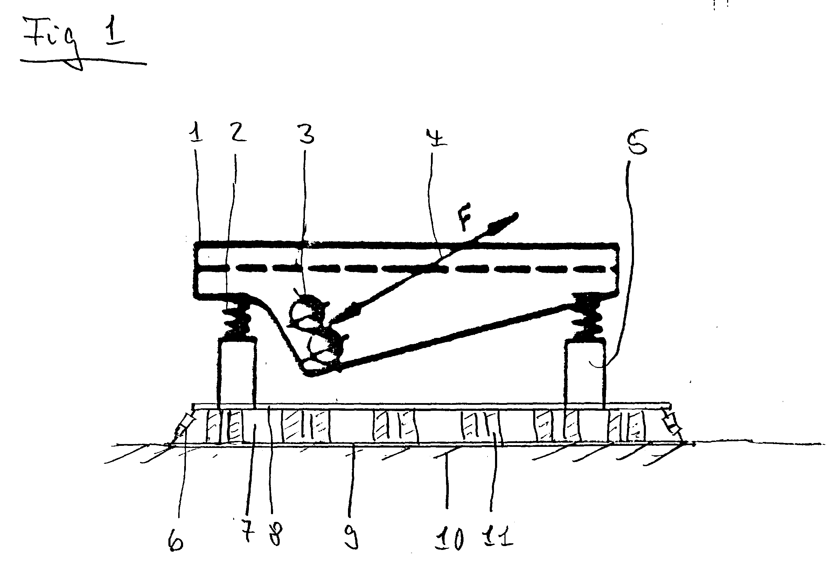

Die Fig. 1 der Zeichnung zeigt in schematischer Darstellung eine Einmassenschwingmaschine 1 mit einer darunter angeordneten Vorrichtung zur Schwingungsisolierung 7 mittels Federelementen 11 und Schwingungsdämpfern 14.

Die Einmassenschwingmaschine 1 besteht aus einer Schwingrinne und daran angeordneten Schwingungserregern 3, die sich über Schraubenfedern 2 auf der Vorrichtung zur Schwingungsisolierung 7 abstützen. Dabei stellt die Einmassenschwingmaschine 1 eine bestimmte Nutzmasse dar, die im Betriebszustand mit einer bestimmten Schwingkraft eine lineare Schwingbewegung in Pfeilrichtung 4 ausführt. Dadurch entsteht sowohl eine dynamische Kraftkomponente in horizontaler- als auch in vertikaler Richtung, wobei insbesondere die vertikale Komponente neben dem statischen Gewicht das Fundament 10 belastet.

Die Schwingmaschine 1 stützt sich über vier die Schraubenfedern 2 enthaltende, Stützfüße 5 auf der Schwingungsisolierungsvorrichtung 7 gegenüber dem Fundament ab. Diese Vorrichtung stellt eine separate Baueinheit dar, die aus einer Deckplatte 8, einer Grundplatte 9 und dazwischen angeordneten Federelementen 11 und Schwingungsdämpfern 14 besteht. Dabei ist den Stützfüßen 5 die Deckplatte 8 und dem Fundament die Grundplatte 9 zugewandt. Die Baueinheit kann flächenmäßig den Grundriß der Schwingmaschine 1 ausfüllen, aber auch in kleineren Einheiten vorgesehen werden. Dabei können die kleineren Einheiten jeweils unter einem Fuß 5 angeordnet werden, als auch mehrere miteinander verbunden sein, so daß die von der Schwingmaschine 1 ausgehenden Kräfte auf eine größere Fundamentfläche verteilt wird.

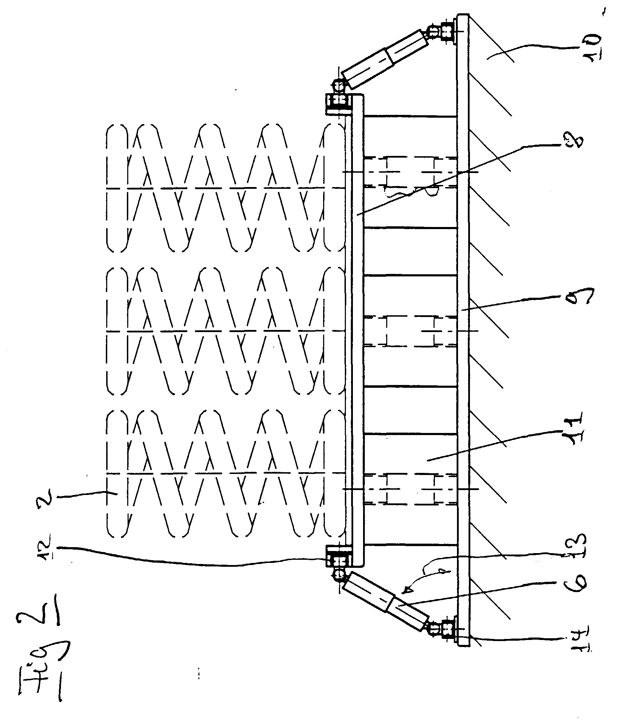

In Fig. 2 der Zeichnung ist eine Baueinheit einer derartigen Schwingungsisolierungsvorrichtung 7 dargestellt, auf der sich maschinenseitig die Schraubenfedern 2 der Schwingmaschine 1 direkt abstützen. Dies stellt eine Baueinheit dar, die für die Abstützung eines Maschinenfußes vorgesehen ist. Die Deckplatte 8 ist aus einem flachen Stahlblech hergestellt, an dessen Ende in Förderrichtung bzw. Maschinenlängsrichtung obere Befestigungselemente 12 angebracht sind, die zur Abstützung der Schwingungsdämpfer 6 dienen. Parallel zur Deckplatte 8 ist fundamentseitig die Grundplatte 9 vorgesehen, die der Deckplatte gegenübersteht allerdings in Maschinenlängsrichtung etwas länger als die Deckplatte 8 ausgebildet ist. An der Grundplatte 9 sind mindestens zwei untere Befestigungselemente 14 angebracht, die den oberen Befestigungselementen 12 schräg gegenüberstehen und zwischen denen die Schwingungsdämpfer 6 angeordnet sind. Die Schwingungsdämpfer 6 bilden mit der Grundplatte 9 einen Winkel 13, der kleiner als 90° ist, wobei beide Schwingungsdämpfer 6 gegeneinander gerichtet angebracht sind, um in vorteilhafterweise die maximalen Schwingungsamplituden in Rinnenlängsrichtung zu dämpfen. Es können aber auch mehr als zwei Schwingungsdämpfer 6 vorgesehen werden, wobei durch eine Erhöhung der Anzahl der Schwingungsdämpfer 6 eine Anpassung an die gewünschte Abschwächung der Amplitude vorgenommen werden kann. Eine besonders kostengünstige Ausführung derartiger Schwingungsdämpfer 6 stellen dabei die in Kraftfahrzeugen verwendeten Gasdruckstoßdämpfer dar, die vorteilhafterweise verwendet werden. Es sind alternativ aber auch hydraulische oder elektrorheologische Stoßdämpfer oder vergleichbare Ausführungen verwendbar.

Zwischen den Deck- 8 und Grundplatten 9 sind gegenüber den Schraubenfedern 2 bzw. den Stützfedern der Schwingmaschine 1 die Federelemente 11 mit hoher Hysteresewirkung angeordnet. Dazu werden vorzugsweise Gummihohlfedern oder vergleichbare Federelemente verwendet. Es können aber auch Federelemente 11 aus elastischen Kunststoffen oder mit derartigen Materialien umgebenen Metallfedern vorgesehen werden, die eine deratig große Hysteresewirkung besitzen, die die dynamischen Schwingkräfte zu einem Großteil absorbiert. Dazu wird die Schwingenergie in Wärme umgewandet, die in vorteilhafterweise durch die aus Metall gefertigten Deck- 8 und Grundplatten 9 abgeleitet wird.

Die Federelemente 11 sind in vorteilhafterweise als Hohlfederelemente ausgebildet, um insbesondere in vertikaler Richtung dämpfungsweich und in horizontaler Richtung dämpfungshart zu wirken, so daß hautpsächlich die vertikalen dynamischen Kräfte auf das Fundament 10 gedämpft werden und um die Schwingung in Stoßrichtung 4 der Schwingmaschine 1 möglichst nicht zu beeinflussen.

Durch die Wahl einer vorteilhaften Gummimischung bzw. Kunststoffmischung kann eine Dämpfung der dynamischen Fundamentkräfte von ca. 80 % erreicht werden, wobei die Beeinflussung der Nutzschwingung noch vernachlässigbar klein bleibt. Da derartige Hohlfederelemente aus Gummi bzw. elastischen Kunststoffmaterialien als Standardbauteile hergestellt werden, ist hierdurch eine besonders kostengünstige Schwingungsisolierung für Schwingmaschinen 1 erzielbar.

Die Federelemente 11 sind aber auch in anderen Ausführungsformen einsetzbar, so können diese auch flächig, quaderförmig oder trapezförmig innen hohl oder innen voll ausgebildet sein. Es sind auch Ausführungen denkbar, die innen oder außen Materialien verschiedener Elastizität und Dämpfungsverhalten besitzen, um hierdurch die Fundamentbelastung zu optimieren ohne die Nutzschwingung nennenswert zu beeinflussen. Durch die besondere Art der Formgebung und der Materialienwahl ist auch zusätzlich eine gewisse Phasenverschiebung zwischen Nutzschwingung und Restschwingung der Isolierungsbaueinheit 7 möglich, die der Nutzschwingung in vorteilhafterweise entgegenwirkt. Dabei ist es vorteilhaft, wenn die Eigenresonanz der Isolierbaueinheit 7 mindestens um den Faktor 2 geringer ist als die Nutzfrequenz.

Da die Federelemente 11 mit großer Hysteresewirkung auf die Schwingamplitude der Betriebsfrequenz abgestimmt sind, werden hierdurch höhere Amplituden insbesondere bei abweichenden Frequenzen nicht hinreichend gedämpft, so daß zumindest kurzzeitig unzulässige Fundamentbelastungen nicht auszuschließen sind. Dies ist speziell während der Inbetriebnahme oder bei Betriebsunterbrechungen möglich, wenn insbesondere bei überkritisch betriebenen Schwingmaschinen die Resonanzfrequenz durchfahren wird. Es sind aber auch besondere Beladungszustände auf der Schwingrinne möglich, die zur Amplitudenerhöhungen führen. Da diese Betriebszustände nur kurzzeitig vorkommen können, werden diese überhöhten Schwingungsamplituden durch die am Ende der Deck- 8 und Grundplatten 9 angeordneten Schwingungsdämpfer 6 verringert. Da diese Amplituden insbesondere in Längsrichtung der Schwingmaschine 1 auftreten, ist es vorteilhaft, die Schwingungsdämpfer 6 schräg in einem Winkel kleiner 90° anzuordnen. In der Praxis hat sich ein Anstellwinkel von 60° als besonders vorteilhaft erwiesen.

## Patentansprüche

1. Vorrichtung zur Schwingungsisolierung bei Einmassenschwingmaschinen, wobei zwischen einer Nutzmasse und einem Fundament Federelemente mit hoher Hysteresewirkung zum Verringern der dynamischen Fundamentbelastung vorgesehen sind, dadurch gekennzeichnet, daß zwischen der Nutzmasse und dem Fundament 10 mindestens eine Baueinheit aus Deckplatte 8 und Grundplatte 9 vorgesehen ist, zwischen denen mindestens ein Federelement 11 und mindestens zwei Schwingungsdämpfer 6 angeordnet sind.

2. Vorrichtung nach Anspruch 1, dadurch gekennzeichnet, daß das Federelement 11 aus Gummi, elastischem Kunststoff und/oder vergleichbaren Materialien mit großer Hysteresewirkung vorgesehen ist, wobei in den Materialien auch Federelemente oder ohne nennenswerte Hysteresewirkung integrierbar sind.

3. Vorrichtung nach Anspruch 1 oder 2, dadurch gekennzeichnet, daß das Federelement 11 als hülsen-, zylinder-, quader-, würfel-, trapezförmig und/oder einer davon ableitbaren Formgebung ausgebildet ist, wobei die quader-, würfel- oder trapezförmigen Federelemente 11 innen voll oder hohl sind.

4. Vorrichtung nach einem der vorhergehenden Ansprüche, dadurch gekennzeichnet, daß die Schwingungsdämpfer 6 als Gasdruck-, Hydraulik- und/oder rheologischer Stoßdämpfer ausgebildet sind.

5. Vorrichtung nach Anspruch 4, dadurch gekennzeichnet, daß die Schwingungsdämpfer 6 in Längsrichtung der Schwingmaschine 1 schräg unter einem Neigungswinkel 13 kleiner 90° paarweise gegeneinander geneigt angeordnet sind.
